# EUROPEAN PATENT SPECIFICATION

(11) **EP 2 090 022 B1**
(45) Date of publication and mention of the grant of the patent: **15.01.2014**
(21) Application number: 06819467.9
(22) Date of filing: 14.11.2006
(51) Int. Cl.: H04L 12/24

(54) **A SYSTEM AND A METHOD RELATING TO NETWORK MANAGEMENT**
SYSTEM UND VERFAHREN BEZÜGLICH NETZWERKVERWALTUNG
SYSTÈME ET PROCÉDÉ APPARENTÉS À UNE GESTION DE RÉSEAU

(43) Date of publication of application: 19.08.2009
(73) Proprietor: Telefonaktiebolaget LM Ericsson (publ), 164 83 Stockholm (SE)
(72) Inventor: SAILHAN, Francoise, Athlone (IE); COLLINS, Sandra, Dublin (IE); DOUDANE, Samir Ghamri, 75012 Paris (FR); FALLON, Liam, Athlone (IE); HUANG, Yang Cheng, Athlone (IE); PARKER, Daryl, Athlone (IE)
(74) Representative: Stasiewski, Piotr Grzegorz
(86) International application number: PCT/EP2006/068448
(87) International publication number: WO 2008/058570

(56) References cited:
- EP-A2- 1 492 267
- WO-A-96/26588
- WO-A1-02/080458
- US-A- 5 889 953
- US-B1- 6 584 502
- FRAN REICHMEYER IP HIGHWAY DAN GROSSMAN MOTOROLA JOHN STRASSNER CISCO MATTHEW CONDELL BBN TECHNOLOGIES: "A Common Terminology for Policy Management" IETF STANDARD-WORKING-DRAFT, INTERNET ENGINEERING TASK FORCE, IETF, CH, 9 March 2000 (2000-03-09), XP015034298 ISSN: 0000-0004

## Description

### TECHNICAL FIELD

The present invention relates to networks supporting group communication and group management. It particularly relates to a node, a system and a method for group management.

### BACKGROUND

Network management is becoming a more and more challenging issue due to the fact that networks become more and more complex, they grow in a forseeable way as well as in unforseeable ways, evolve continuously and require interoperability with other networks. An increasingly complex and heterogeneous network environment is also expected due to the emergence of an enormous amount of new, complex and advanced services. Different standards are implemented, management and billing service provisioning should be provided in a satisfactory manner both for customers, network operators and management staff. Over the last years, group communication has become an interesting issue. Numerous grouping strategies targeting distinct applications and designed to operate in specific networks have been proposed. A plurality of grouping protocols are known, such as for example the traditional token-ring protocols, multicast protocols and application-level and overlay-based grouping protocols.

By means of token ring protocols, a ring-based topology is created which is used to pass a token around the group members for e.g. controlling access to a given resource. Such protocols typically target small size networks. So called multicast protocols, on the other hand, focus on large scale networks. IP (Internet Protocol) multicast allows data to be sent to multiple receivers independently of their localization. The sources only need to know a multicast address and do not process any membership related information. As a consequence thereof, it becomes possible for members to join or leave a group easily since there is no need to register with a centralised group management entity. However, IP multicast has not been deployed to a very large extent both for technical reasons, such as complex billing, management and security concerns, but also for non-technical reasons. Therefore application-level based on overlay-based protocols have been suggested which have been more popular. Application-level grouping is for example discussed in "Yoid: Your Own Internet Distribution", Paul Francis et al., http://www.isi.edu/div7/yoid/, and the NICE protocol "Scalable Application Layer Multicast" S. Banerjee, B. Bhattacharjee, C. Kommareddy, Proceedings of ACM Sigcomm 2002, Pttsburgh, Pennsylvania, August 2002. It is based on end hosts implementing group-related functionalities such as membership management. The underlying physical topology is hidden and a virtual graph is created between all the nodes. The overlay based approaches are for example described in "Scribe: A large scale and decentralized application-level multicast infrastructure" by M. Castro, et al. in IEEE Journal on selected areas in communications, Vol. 20, No 8, 2002.

Such overlay based approaches first build a DHT-based overlay assigning some coordinate or identity to each member so as to create a well connected virtual network, corresponding to an overlay network, on top of which a group is created.

The fact that grouping management is a fundamental concept in computer science, has had as an effect that a large variety of protocols have been developed, each creating different grouping topologies adapted to application requirements, for example bandwidth availability for real-time video delivery or video conference. However, a group management strategy, which includes a membership strategy and a group structure management strategy, raises a number of issues which cannot be satisfactorily handled by the current grouping protocols. Indeed, it typically requires human intervention to set up complex network element grouping in a large-scale network. The routing protocol OSPF (Open Shortest Path First), cf. OSPF version 2, IETF RFC (Request for Comments) 1247, www.ietf.org., July 1991 by J. Moy, requires the definition of separate areas in which traffic induced by flooding of link state information can be confined. However, this area definition still has to be performed statically by a network administrator. In addition thereto, grouping protocols only verify one or a limited set of constraints, and use one or a limited set of metrics to guarantee their performances. For example, a metric can impact on the structure of the group, elements can be grouped in an ordered way according to their bandwidth, or their distance (geographical or number of hops). Constraints may relate to the maximum number of elements that are grouped, minimum capacity required to group the network elements, for example processing power, memory, storage space, or the role of the network elements, (for example Radio Base Stations (RBS) or Radio Network Controllers (RNC) or any other nodes or network elements). This simplicity of the grouping protocols remains a major obstacle for configuring and managing dynamically sets of networked resources and network elements that are heterogeneous in nature, complex to manage, and dynamically evolved.

There are known documents related to grouping in communications networks, namely US5889953, WO02/080458 and WO96/26588. However devices and operations as in the invention now to be described are neither disclosed nor suggested in these documents.

Thus, so far no satisfactory way of providing for grouping or grouping management has been provided.

### SUMMARY

It is an object of the present invention to provide means for network management implementing grouping. It is also an object of the invention to provide a solution that enables efficient implementation of group communications and group management, and particularly to provide a solution which enables automation of network management as well as increased performance thereof. Still further is an object of the invention to provide a solution as far as network management is concerned through which operation and maintenance traffic can be reduced and through which network management efficiency in general can be increased. Particularly it is an object of the invention to provide a node through which on or more of the above mentioned objects can be achieved, as well as a system and a method respectively, through which one or more of the above mentioned objects can be achieved.

Therefore the present invention suggests a node supporting networking and communication with other nodes by means of a layered communication protocol comprising a communication layer and further supporting group communication with other nodes controlled via a grouping protocol adapted to interact with said communication layer. The node comprises a policy engine which is arranged separately from, but in communication with, said grouping protocol.

Said policy engine comprises or communicates with monitoring means adapted to collect said current and/or change related information concerning status and/or activity of nodes, group and network. Said policy engine further comprises a policy decision means, wherein said monitoring means is adapted to provide said information to the policy decision means. Said policy engine further comprises a policy handling means adapted to indicate and/or activate one or more grouping policies to be used in node grouping and further being adapted to provide information about said one or more grouping policies to the policy decision means. The policy decisions means is adapted to interpret said active grouping policies and to make grouping related policy decisions based on said interpretations.

Said policy engine further comprises a policy enforcement means adapted to enforce said decisions. Said policy enforcement means are adapted to enforce said decisions using the grouping protocol interacting with the communication layer of the communication protocol. The node is adapted to comprise or communicate with configuration and management applications, wherein the policy engine is adapted to create and dynamically adapt the grouping and grouping related features according to current network context and configuration and management tasks provided by said configuration and management applications.

The invention also suggests a data or telecommunications network comprising a number of nodes having the features described above.

In order to solve one or more of the problems discussed above, i.e. to fulfil one or more of the objects referred to above, the invention also suggests a method for configuration and management tasks in a network comprising nodes supporting communication and networking with other nodes by means of a layered communication protocol, comprising a communication layer, and a grouping protocol, wherein each of said nodes has the features described above.

It is an advantage of the invention that self-grouping of network elements or nodes can be provided. Generally it is an advantage that network management performance can be increased and made more efficient and that operation and maintenance related traffic significantly can be reduced. Still further it is an advantage that human interaction or involvement can be reduced at the same time as network management efficiency can be increased. It is also an advantage that network management, e.g. operation and maintenance, can be facilitated and improved also for evolving and changing network structures. A particular advantage lies in that it becomes possible to integrate and manage several heterogeneous environments, different network operators and network vendors. A positive aspect is also that in several ways network management can be automated more or less independently of network size and complexity. A particularity of the invention is that the need for human intervention and financial costs associated therewith are reduced. This is achieved through automation of configuration and management upon a grouping structure which is adapted to the requirements driven by the specific configuration and management tasks that need to be achieved. It is also particularly an advantage that it becomes possible to timely, in a managed and controlled way, handle the grouping while eliminating human errors and omissions etc. An important advantage is also that adaption to new requirements or changes of behaviour can be handled without requiring and re-implementation of grouping protocols (which is time-consuming costly and involves a risk of introducing errors into the system).

### BRIEF DESCRIPTION OF THE DRAWINGS

The invention will in the following be more thoroughly described, in a non-limiting way, and with reference to the accompanying drawings, in which:
- Fig. 1: schematically illustrates a node in which the inventive concept is implemented.
- Fig. 2: is a simplified overview of a network comprising a number of nodes with indication of a current group,
- Fig. 3: is a more detailed illustration of a node according to one embodiment of the invention,
- Fig. 4: schematically illustrates another embodiment of a node according to the invention,
- Fig. 5: is a schematical flow diagram describing in general terms one example of the inventive procedure,
- Fig. 6: is a more detailed flow diagram describing an implementation of the inventive procedure,
- Fig. 7A: is a flow diagram describing policy adapting by means of a graphical interface, and
- Fig. 7B: is a flow diagram describing reception of a policy update.

### DETAILED DESCRIPTION

According to the present invention policies are used for the purpose of grouping nodes or network elements. Through a policy-based grouping according to the present invention, a plurality of nodes or network elements, for example computers, base stations, routers or resources are enabled to form a self-organizing and adaptive group or groups for the purpose of their configuration and management. The group formation particularly takes place automatically in so far that no or only a minimum of human involvement or interaction is required. According to the inventive concept, nodes or managed network elements particularly are provided with the capability of explicitly controlling their grouping. For this purpose policies are enacted which serve as general guidelines to restrict and define both the behaviour of the group members and the metrics used to create and adapt the group structure according to the current situational context (the network context) and according to the configuration and management tasks that have to be performed.

In a particular embodiment the node comprises a policy engine which comprises monitoring means adapted to collect current and/or change related information concerning status and/or activity or nodes, groups and network and further being adapted to provide said information to a policy decision means. Policy handling means may also be provided which are adapted to indicate and/or activate one or more grouping policies to be used in the node grouping and to provide information about said one or more grouping policies to the policy decision means. The policy decision means are then adapted to interpret said active grouping policies and to make grouping related policy decisions based on said interpretations. The policy engine preferably also comprises policy enforcement means which are adapted to enforce said decisions.

In an advantageous implementation said policy enforcing means are adapted to enforce said decisions using the grouping protocol interacting with the communication layer of the communication protocol. The policy handling means may particularly comprise a policy management tool with a user interface. This enables a network administrator or some management operator to activate, select or indicate policies to be used for grouping purposes. The policy handling means may also, or additionally, comprise or communicate with policy holding means for holding grouping policies. In one embodiment the policy holding means are provided locally on the node. They may also be associated with the node, or associated with some nodes.

In a particular implementation the policy decision means are adapted to control a grouping related decision process, which may relate to one or more of group membership of nodes, group structure, group or group member constraints and metrics. This decision process may for example be used to answer to specific objectives of network configuration management tasks or applications which are provided by a configuration and management application.

The grouping protocol preferably comprises a group management protocol providing messaging capabilities required for group controlling and node group member communication.

Advantageously the policy enforcement means are adapted to control, for example by giving orders to, the grouping protocol, wherein said orders correspond to the decisions made in the decision means.

In a preferred, but optional, implementation, the policy decision means comprises a policy conflict resolution function which is adapted to detect conflicts between policy rules of different active policies and to resolve the conflicts either automatically or by means of invoking (to some extent) manual or operator intervention.

The grouping policies are particularly defined as sets of policy rules. Particularly the node is adapted to comprise or communicate with configuration and management applications, and the policy engine is particularly adapted to create and dynamically adapt the grouping and grouping related features or actions according to current network context and configuration and management tasks provided (or input) by said configuration and management applications.

In a particular implementation each policy rule comprises a set of conditions and a set of actions related to said conditions. A condition may comprise a compound expression which is related to one or more entities such as group members, hosts and grouping protocols. An action relates to a set of actions specifying parameters to be input to one or more grouping protocols.

In the present invention a node may comprise a computer, e.g. a PC (Personal Computer), a PDA (Personal Digital Assistant), a node of a mobile telecommunications network, for example of a radio access network, e.g. a Radio Base Station (RBS), an RNC (Radio Network Controller) or any other node of the radio network or a node of a core network. It may also comprise any node of a data communications network or generally a Network Element (NE) or some kind of a managed node.

Particularly, in an advantageous implementation, the method comprises the steps of; providing the active grouping related policies to be used for grouping purposes to a policy decision means of the policy engine of a node; monitoring in monitoring means provided in the node, current status and/or change related information of said nodes, group and network; providing said current status and/or change related information to the policy decision means; interpreting the grouping policies with respect to current status and/or activity related information; making grouping related decisions based on said interpretations; enforcing the decisions made by means of the grouping protocol interacting with the communication layer to enable interaction and communication with other nodes. Other preferred or advantageous, optional, features may be implemented in any desired manner, also with respect to the inventive method.

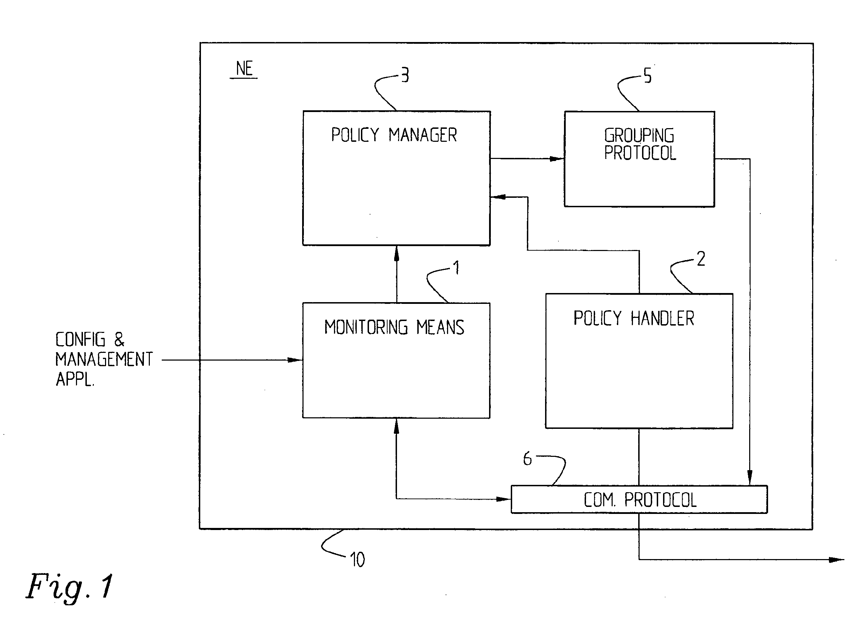

Fig. 1 schematically illustrates a node or a Network Element NE 10 in which the inventive concept is implemented. The node 10 additionally comprises any other conventional means needed for performing the task of the node in question, which means are not shown herein since the node actually may relate to any kind of node as discussed above. According to one implementation of the inventive concept the node comprises monitoring means 1 comprising a monitoring component or manager tracking the state and changes in the network as well as the activity and status of both the group and node members, i.e. it collects or establishes current or up-to-date information. Alternatively it establishes (detects) or collects changes. The information is then reported to a policy manager 3 acting as a Policy Decision Point (PDP) and being adapted to interpret the policies as provided from a policy handler 2 concerning the group formation strategy. The purpose is to guide the decision making process (concerning for example the membership of nodes, the structure of the group, the constraints, and metrics used) to meet the specific objectives of the relevant network-configuration and management task/application. In this figure the policy handler 2 is very schematically illustrated. It may collect policies and activate them in any appropriate manner or it may comprise a user interface for indication and/or activation of relevant grouping policies, which then are provided to the policy manager 3. The policy manager 3 comprises means for interpreting active policies in the light of current node, group and network related information for making appropriate decisions. The policy manager 3 also comprises enforcement means adapted to enforce the policy decisions made by the decision function of the policy manager 3 by cooperating with the group management protocol 5, which in turns interacts with the communication layer of the communication protocol 6. The communication layer provides all messaging utilities necessary for interaction with other group members and to control the group structure.

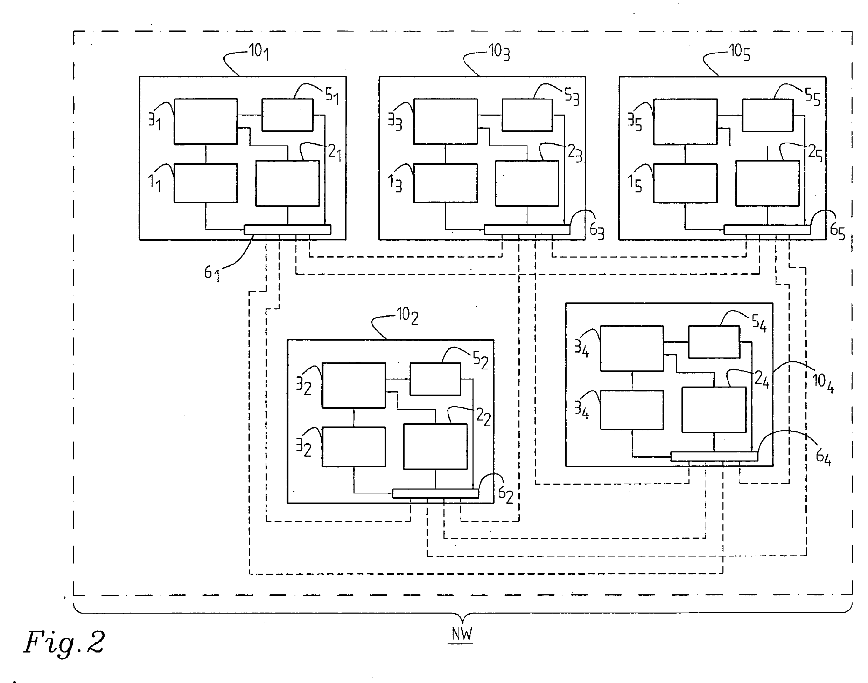

Fig. 2 very schematically illustrates a network comprising a number of nodes 10₁, 10₂, 10₃, 10₄, 10₅ including a functionality as described with reference to Fig. 1. It is here supposed that a group 61 is formed consisting of nodes 10₁, 10₂, 10₃. Using grouping policies as described above, the nodes will be self-grouping for management. In one embodiment the nodes can be grouped in a tree-like manner providing a basic structure for aggregating messages relating to faults that occur on nodes or network elements. Such a grouping reduces the operation and maintenance traffic significantly and therefore increases the management efficiency of the network. Of course nodes can be grouped in other manners, or more generally in any appropriate manner. The groups are formed automatically and they are adapted for configuration and management purposes. It should be clear that a group can have any structure with different features which vary over time; Fig. 2 is merely taken to very schematically illustrate a network comprising a number of nodes in which the inventive concept is implemented and wherein, currently, a group is formed. Node, group related information and network related information is provided between all nodes irrespectively of whether they currently are group members or not. This is one of the factors enabling the dynamical and automatical forming of groups.

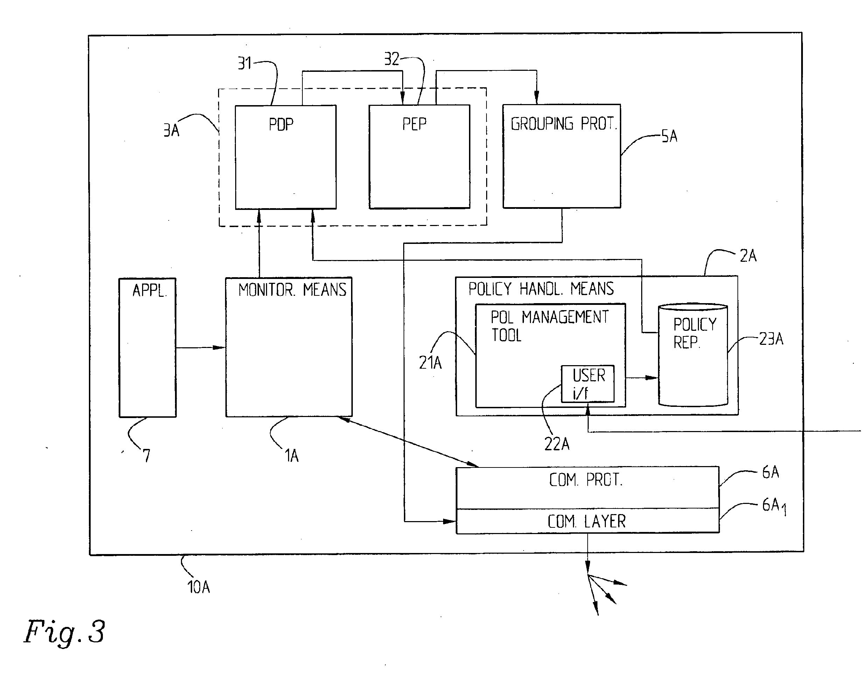

Fig. 3 shows a specific embodiment of a node 10A according to the present invention. As in Fig. 1 the node comprise a monitoring means 1A. The monitoring means here comprise a monitoring component or a manager establishing or tracking the state and changes in the network as well as the activity and status of both group and node members. The monitoring means 1A are adapted to report said established current and activity related information to a policy decision point PDP 31 of a policy managing means 3A. The PDP 31 is adapted to interpret the active policies (see below) concerning group formation strategy, so as to guide the decision making process, as discussed above, to answer to the specific objectives of a network configuration and management task/application 7, which in Fig. 3 is illustrated as being incorporated in the node 10A. Via a user interface 22A of a policy management tool 21A of policy handling means 2A, a network administrator or similar may indicate or input grouping policies that are to be used for grouping purposes by means of a user interface. In this case the policy handling means 2A also comprise a policy repository 23A from where the applicable grouping policies upon indication via user interface 22A can be activated or indicated and provided to the PDP 31 as discussed above. Thus, PDP 31 is provided with the current or up-to-date (and/or change related) information from the monitoring means 1A and with the relevant active policies from the policy handling means 2A, in this case particularly from the policy repository 23A. PDP 31 is adapted to make decisions based on the active grouping policies and with regard to the current situation or network context or the configuration and management tasks to be performed according to application 7. When decisions have been made in PDP 31, they also have to be enforced. Therefore information about the decisions made is provided to a policy enforcement point PEP 32 which is responsible for enforcing the policy decisions made by the PDP 31. PEP 32 enforces the decisions by cooperating with the grouping or group management protocol 5A which interacts with the communication layer 6A of the communication protocol, thus allowing interaction and messaging with the other group members and allowing for group structure control. Actually the PDP 32 gives order or orders to the grouping protocol which interacts with the communication layer 6A₁.

In a particular implementation the node comprises a policy conflict resolution function, advantageously implemented in the policy manager 3A, particularly PDP 31, which is adapted to detect conflicts between e.g. contradicting or overlapping policies, for example to prevent the system from any unpredictable or faulty grouping behaviour.

A policy particularly guides the grouping behaviour and regulates how the group is structured through high-level declarative directives corresponding to rules. Each policy rule particularly comprises a set of conditions and a set of related actions. Policy rules are in the form of if "condition" then "action". The "condition" expression may be a compound expression relating to entities such as group members, hosts or grouping protocols. The "action" expression may relate to a set of actions that specify for example parameters to be input or provided to one or more grouping protocols.

According to the actions given by the policy engine, particularly the policy managing means 3, 3A or more generally the policy engine here comprising this manager, (PDP 31, PEP 32), policy handler 2 or policy handling means 2A (with policy management tool 21A and policy repository 23A) and monitoring means 1A, the grouping protocol can adapt the grouping structure dynamically, substantially without requiring any human intervention at all. Particularly the monitoring means (e.g. 1;1A;1B) do not have to be included in the policy engine, but may consist of separate means.

If a conflict resolution procedure is implemented, the node 10; 10A particularly comprises a conflict detection function which is adapted to verify that policies do not contradict each other. A policy conflict resolution procedure may be automatically invoked when a conflict has been detected, or by means of some kind of intervention when a conflict has been detected and indicated. It may either be done automatically or operator controlled. In some embodiments the intervention of a network administrator may be mandatory to determine which policy is to be used in case two or more policies contradict each other or overlap etc.

Alternatively a conflict is regulated automatically by means of a predetermined scheme where different policies are given different priorities and then only if two (or more) policies have the same priority human intervention is required. It is of course also possible to provide for automatic selection of a policy to be active according to some predefined criteria, (e.g. depending on which policy was activated first, which policy concerns the largest number of entities or arbitrarily, randomly etc.), even when the priority is the same.

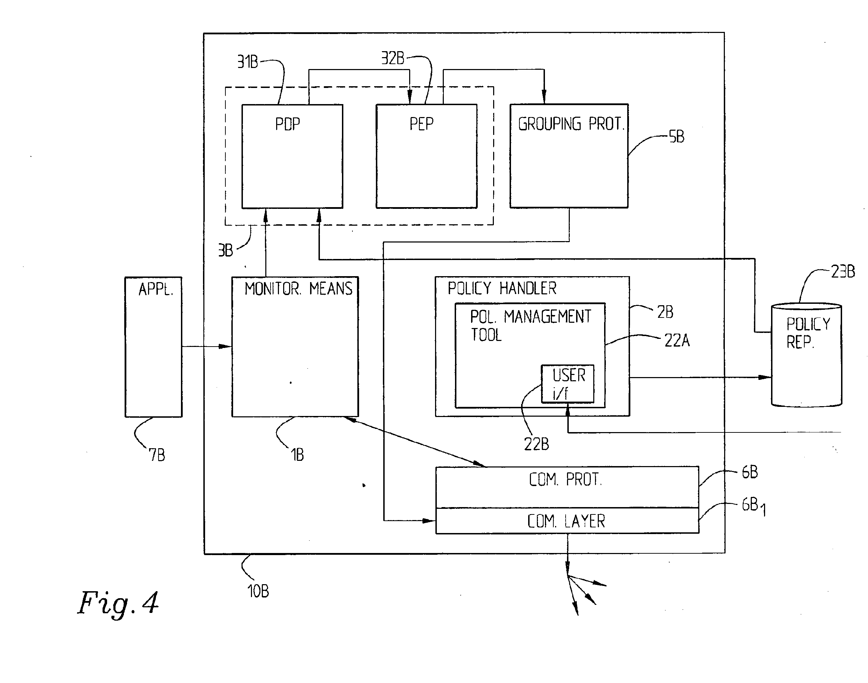

Fig. 4 schematically illustrates an alternative implementation of a node or a network element 10B in which the inventive concept is implemented. As in Fig. 3 the node comprises monitoring means 1B, a policy handling means 2B comprising a policy management tool with a user interface 22B, policy managing means 3B with a PDP 31B and a PEP 32B as in Fig. 3. Further the node comprises or supports a grouping protocol 5B interacting with the communication protocol 6B communication layer 6B₁ as in Fig. 3. However, in this case a policy repository 3B is provided externally of the node but in communication with the policy management tool 21B, or more generally with the policy handler 2B. In such an implementation relevant grouping policies are provided or communicated to, or fetched from the policy repository 23B by the policy handler 2B or by the policy management tool 21B and forwarded to, the PDP 31B. Generally the policies may be provided for in any appropriate manner. A configuration and management application is here shown as being provided externally of node 10B.

It should be clear that of course embodiments are also covered wherein the applications reside within the node. In a similar manner, a policy repository or similar may be outside the node or inside the node, but not related to, or related to, the applications residing in the node. In this case, hence, the policy engine includes the policy managing means 3B, the monitoring means 1B and the policy handling means 2B, whereas in Fig. 3 the policy engine is considered also to include a policy repository.

Below some examples of policies for group formation are given. It should be clear that the examples are given purely for exemplifying, non-limiting, purposes and they should in no way be interpreted in a restrictive manner, i.e. many other policies concerned with group formation or features thereof can be used, either separately or in combination.

Hence, as a first example there may be a policy based on the role and logical hierarchy of the network elements which policy is defined to group all, here, RBSs together and give the leadership of the group to an RNC and further to group neighbouring RNCs. An example of a corresponding rule would be: if the concerned node is an RBS, then notify the nearest RNC and connect to it.

Another policy may be based on geography for grouping network elements according to geographical proximity or similar. Still further a grouping policy may be based on application level so as to group nodes or network elements according to shared interests, or shared information, or one or more common functionalities.

Still another example is a policy relating to group control, for example defining the maximum number of RBSs that can be lead or controlled by an RNC before splitting the group and sharing the leadership with another RNC.

An example of using these policies could be a grouping structure for a configuration and management task corresponding to tracking and managing the events triggered by some nodes or network elements. For this purpose an efficient grouping structure consists in dynamically organizing the nodes or network elements in a tree-like manner in order to allow the nodes of the tree to perform event aggregation and correlation, and therefore, reduce the traffic generated by the event dissemination. Such a grouping can be achieved as follows: Supposing that a management application subscribes to a particular kind of event, the requirement is triggered by the monitoring manager and redirected to the policy decision point. The policy decision point takes into account the role of the local host, for example an RNC or an RBS, and assigns the local node a position in a given level of the tree. The considered number of possible children that are selected depends on the location of the network element or node. After receiving the decision made by the PDP, the PEP enforces it by giving the information in a comprehensive way to the protocol that implements it, i.e. structure the members in a tree-like manner. It should be clear that this merely is an example among many others intended to show how the inventive concept can be implemented.

According to defined or activated policies nodes may, according to the inventive concept, permanently or temporarily organize themselves into groups based on for example the metric or metrics driven by the configuration and management tasks that are to be performed. Therefore, despite a large network size and a large network complexity, many aspects of network management can be automated through a policy based system as discussed above providing an explicit organization of the network used as a basis for performing management tasks.

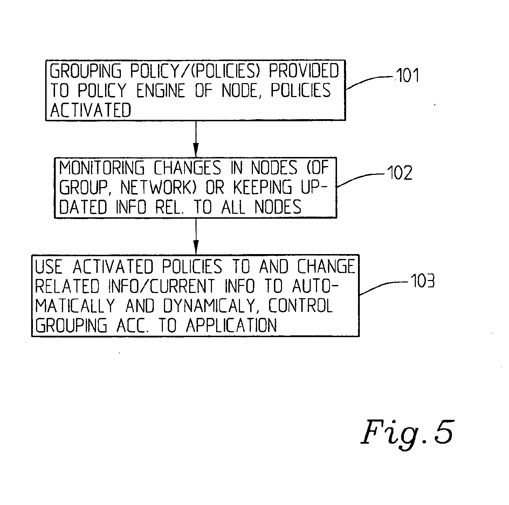

Fig. 5 very schematically illustrates a flow diagram intended to describe the main steps of the inventive concept. It is assumed that one or more grouping policies is/are provided to a policy engine of a node and that these policies somehow are activated, 101. The provisioning and the activation of the policies can be carried out in two separate steps or in one step and the provisioning as well as the activation of policies can take place in many different ways, the most important being that one or more policies which concern grouping are provided to a node. Also other nodes in the network are presupposed to support the same concept and hence also comprise what is called a policy engine as exemplified in Figs. 1, 3 and 4 above.

It is also supposed that more or less in parallel with the provisioning and activation of grouping policies, changes in nodes, in the group and in the network, as well as group characteristics are monitored by monitoring means of the policy engine (alternatively it keeps or collects updated information relating to all nodes implementing the concept), 102. Also the monitoring can take place in different ways, either by continuously monitoring state etc., or by performing the monitoring at discrete steps, or by providing for the ability to detect changes in general or changes of a number of predefined types.

In the policy engine of a node, the activated policies in view of the change related information or current information are used to automatically and dynamically control grouping according to a relevant application, 103.

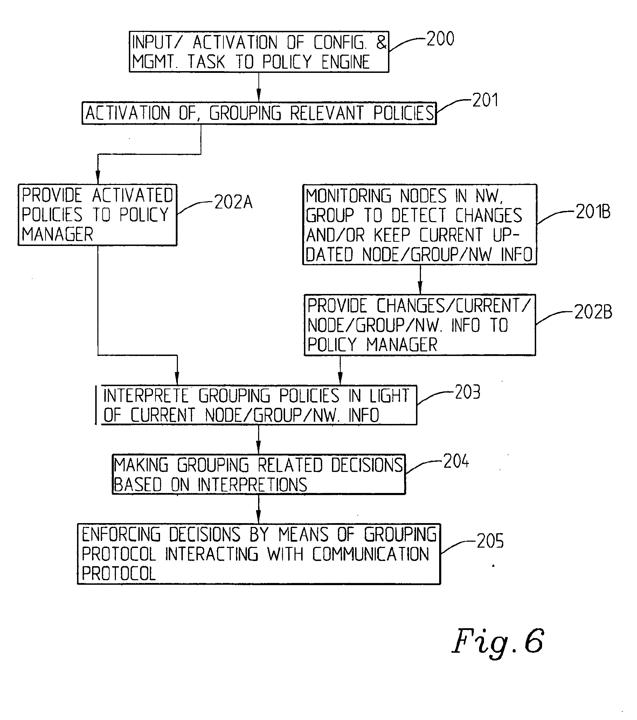

Fig. 6 is a flow diagram describing an exemplary procedure of the inventive concept. It is supposed that a configuration and management task is input or provided to a policy engine of a node, 200. In the node relevant grouping policies are activated in any appropriate manner as discussed above, 201. The activated policies are provided to the policy manager, 202A. The policy engine monitors nodes, the network, the group to detect changes and/or to keep current updated node, group and network information, 201B. The monitoring procedure may be performed in many different ways, continuously, at discrete occasions or at predetermined occasions. Reporting may also be done to the monitoring means at the occurrence of certain events, changes etc. The changes or the current information of the group node, group and/or network are/is provided to a policy manager of the policy engine in the node, 202B. Using the information provided in steps 202A and 202B respectively concerning grouping policies and changes or current node information etc., the grouping policies are interpreted in the light of current node/group/network information, 203. The policy manager of the policy engine then makes grouping related decisions based on said interpretations, 204. By means of a grouping protocol interacting with the communications protocol implemented in the network, the decisions are enforced, 205.

In one implementation a policy administrator is responsible for keeping the policies that are used by the group members up-to-date. The policy administrator may then use the policy management tool, cf. Fig. 4. It should be noted that the policy administrator may use any policy management tool deployed on the group members. In a particular implementation the policy management tool provides a graphical interface allowing the policy administrator to easily specify, change, and delete the policies that are used in the overall group and a distribution functionality in charge of propagating the policy updates to the rest of the group. It should be clear that the policy management tool may be of many different kinds. For example, as an alternative to a graphical interface, it may comprise an audio interface or a combined interface or any appropriate automatic interface etc.

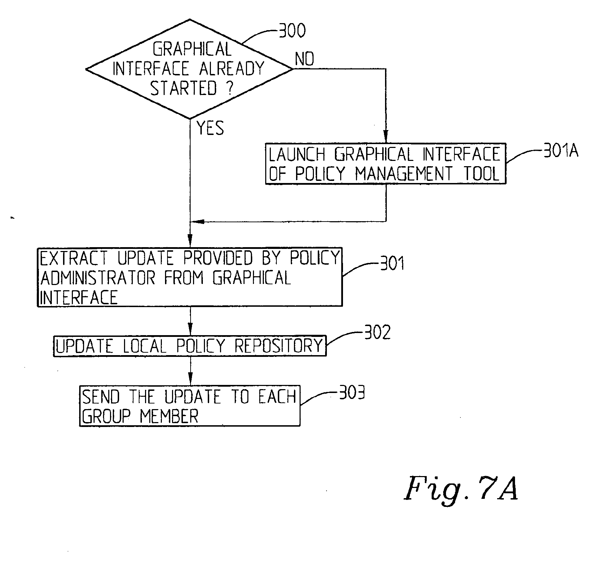

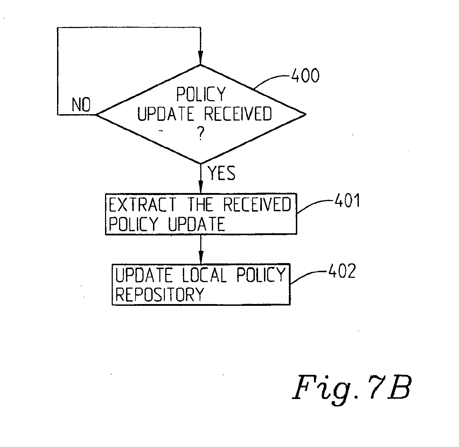

Fig. 7A shows one example of the process of updating a policy. First of all, the administrator launches a (here) graphical interface which is included in the policy management tool. If the graphical interface is already running on the administrator's terminal, there is no need to run another instance of the graphical interface, i.e. it is established if the graphical interface is already started, 300. If not, the graphical interface of the policy management tool is launched, 301A. Then, and if the graphical interface already was started, the updates provided by the policy administrator are extracted from the graphical interface, 301, and the local policy repository is updated, 302. Thus, using the graphical interface, the policy administrator updates the policies that in addition are stored in (here) the local policy repository. Then the update or updates are sent to each group member, 303, i.e. the updates are distributed to all members of the group by the policy management tool as illustrated in Fig. 7B.

Upon reception of such an update, the policy management tool deployed on the receiver updates the policies included in its local policy repository, i.e. it is established if a policy update is received, 400. If yes, the received policy is extracted, 401, and the local policy repository is updated, 402.

It should be clear that the invention is not limited to the specific, illustrated embodiments but can be varied in a number of ways within the scope of the appended claims.

## Claims

1. A node (10;10₁ ,..., 10₅ ;10A;10B) supporting networking and communication with other nodes by means of a layered communication protocol (6; 6₁ , ..., 6₅ ; 6A; 6B) comprising a communication layer and further supporting group communication with other nodes controlled via a grouping protocol adapted to interact with said communication layer, the node comprising a policy engine (1, 2, 3; 1₁, 2₁, 3₁, ... ; 1A, 2A, 3A; 2B, 3B) which is arranged separately from, but in communication with, said grouping protocol (5; 5₁, ..., 5₅5A; 5B),
wherein
said policy engine comprises or communicates with monitoring means (1; 1₁, ..., 1₅; 1A, 1B) adapted to collect said current and/or change related information concerning status and/or activity of nodes, group and network, said policy engine further comprising a policy decision means, said monitoring means (1; 1₁, ..., 1₅ ; 1A, 1B) being adapted to provide said information to the policy decision means (3; 31, 3₁ ,...,3₅ ;31;3B), and a policy handling means 2; 21, ...,25; 2A; 2B) adapted to indicate and/or activate one or more grouping policies to be used in node grouping and further being adapted to provide information about said one or more grouping policies to the policy decision means (3; 31, 3₁ , ..., 35; 31; 3B), the policy decisions means (3; 31, 3₁ ,...,3₅ ; 31; 3B), being adapted to interpret said active grouping policies and to make grouping related policy decisions based on said interpretations, and policy enforcement means adapted to enforce said decisions.
wherein said policy enforcement means (3;,3₁,...,3₅ ; 32; 32B) are adapted to enforce said decisions using the grouping protocol interacting with the communication layer (6A₁; 6B₁) of the communication protocol (6; 6₁, ... , 6₅ ; 6A; 6B)
wherein the node is adapted to comprise or communicate with configuration and management applications and in that the policy engine is adapted to create and dynamically adapt the grouping and grouping related features according to current network context and configuration and management tasks provided by said configuration and management applications.

2. A node according to claim 1, **characterized in that** the policy handling means (2A;2B) comprises a policy management tool (21A;22A) with a user interface (22A;22B).

3. A node according to any one of claim 2, **characterized in that** the policy handling means (2A;2B) comprises or communicates with policy handling means (23A;23B) holding policies related to grouping.

4. A node according to claims 2 or 3, **characterized in that** the policy decision means (3; 31, 3₁ ,...,3₅ ; 31; 3B) are adapted to control a grouping related decision process relating to one or more of group membership of nodes, group structure, group or group member constraints, metrics.

5. A node according to any one of claims 2-4,**characterized in that** the grouping protocol (5; 5₁, ... , 5₅ ; 5A; 5B) comprises a group management protocol providing messaging capabilities required for group controlling and node group member communication.

6. A node according to any one of claims 2-7, **characterized in that** the policy enforcement means (3;,3₁, ..., 3₅ ; 32; 32B) are adapted to control, e.g. by giving orders to, the grouping protocol, said orders corresponding to the decisions made in the policy decisions means (3; 31, 3₁,..., 3₅ ; 31; 3B).

7. A node according to claim 6,**characterized in that** the policy decision means (3; 31, 3₁,..., 3₅ ;31; 3B) comprise a policy conflict resolution function adapted to detect conflicts between policy rules of different active policies and to resolve the conflicts automatically or by means of invoking manual intervention.

8. A data or telecommunications network, **characterized in that** it comprises a number of nodes (10;10₁,...,10₅ ;10A; 10B) according to any one of claims 1-7.

9. A method for configuration and management tasks in a network comprising nodes supporting communication and networking with other nodes by means of a layered communication protocol, comprising a communication layer, and a grouping protocol, wherein each of said node is according to claims 1-7.

## Patentansprüche

1. Knoten (10; 10₁,..., 10₅; 10A; 10B), der Vernetzung und Kommunikation mit anderen Knoten mittels eines geschichteten Kommunikationsprotokolls (6; 6₁, ..., 6₅; 6A; 6B) unterstützt, das eine Kommunikationsschicht umfasst, und ferner Gruppenkommunikation mit anderen Knoten unterstützt, die über ein Gruppenbildungsprotokoll gesteuert werden, das so ausgelegt ist, dass es mit der Kommunikationsschicht kommuniziert, wobei der Knoten eine Richtlinienmaschine (1, 2, 3; 1₁, 2₁, 3₁, ...; 1A, 2A, 3A; 2B, 3B) umfasst, die getrennt vom Gruppenbildungsprotokoll (5; 5₁,..., 5₅; 5A; 5B) angeordnet, aber in Kommunikation damit ist,
wobei
die Richtlinienmaschine Überwachungsmittel (1; 1₁, ..., 1₅; 1A, 1B) umfasst oder damit kommuniziert, die so ausgelegt sind, dass sie die aktuellen und/oder änderungsbezogenen Informationen in Bezug auf Status und/oder Aktivität von Knoten, Gruppen und Netz sammeln, die Richtlinienmaschine ferner umfassend ein Richtlinienentscheidungsmittel, wobei die Über-wachungsmittel (1; 1₁ , ..., 1₅; 1A, 1B) so ausgelegt sind, dass sie die Informationen an das Richtlinienentscheidungsmittel (3; 31, 3₁, ..., 3₅; 31; 3B) liefern, und ein Richtlinienbearbeitungsmittel (2; 21,..., 25; 2A; 2B), das so ausgelegt ist, dass es eine oder mehrere Gruppenbildungsrichtlinien anzeigt und/oder aktiviert, die bei der Knotengruppenbildung verwendet werden sollen, und ferner so ausgelegt ist, dass es Informationen über die eine oder die mehreren Gruppenbildungsrichtlinien an das Richtlinienentscheidungsmittel (3; 31, 3₁, ..., 35; 31; 3B) liefert, wobei das Richtlinienentscheidungsmittel (3; 31, 3₁, ..., 3₅; 31; 3B) so ausgelegt ist, dass es die aktiven Gruppenbildungsrichtlinien interpretiert und basierend auf den Interpretationen gruppenbildungsbezogene Richtlinienentscheidungen trifft, und Richtliniendurchsetzungsmittel, die so ausgelegt sind, dass sie die Entscheidungen durchsetzen,
wobei die Richtliniendurchsetzungsmittel (3; 3₁, ..., 3₅; 32; 32B) so ausgelegt sind, dass sie die Entscheidungen unter Verwendung des Gruppenbildungsprotokolls durchsetzen, das mit der Kommunikationsschicht (6A₁; 6B₁) des Kommunikationsprotokolls (6; 6₁, ..., 6₅; 6A; 6B) interagiert,
wobei der Knoten so ausgelegt ist, dass er Konfigurations- und Verwaltungsanwendungen umfasst oder damit kommuniziert, und dadurch, dass die Richtlinienmaschine so ausgelegt ist, dass sie die Gruppenbildungs- und gruppenbildungsbezogenen Merkmale gemäß dem aktuellen Netzkontext und Konfigurations- und Verwaltungsaufgaben, die durch die Konfigurations- und Verwaltungsanwendungen bereitgestellt werden, erstellt und adaptiv anpasst.

2. Knoten nach Anspruch 1, **dadurch gekennzeichnet, dass** das Richtlinienbearbeitungsmittel (2A; 2B) ein Richtlinienverwaltungstool (21A; 22A) mit einer Benutzerschnittstelle (22A; 22B) umfasst.

3. Knoten nach Anspruch 2, **dadurch gekennzeichnet, dass** das Richtlinienbearbeitungsmittel (2A; 2B) Richtlinienbearbeitungsmittel (23A; 23B), die Richtlinien in Bezug auf Gruppenbildung speichern, umfasst oder damit kommuniziert.

4. Knoten nach Anspruch 2 oder 3, **dadurch gekennzeichnet, dass** die Richtlinienentscheidungsmittel (3; 31, 3₁,..., 3₅; 31; 3B) so ausgelegt sind, dass sie einen gruppenbildungsbezogenen Entscheidungsprozess steuern, der mit einem oder mehreren von Gruppenmitgliedschaft von Knoten, Gruppenstruktur, Gruppen- oder Gruppenmitgliedsbeschränkungen, Metriken in Beziehung steht.

5. Knoten nach einem der Ansprüche 2 bis 4, **dadurch gekennzeichnet, dass** das Gruppenbildungsprotokoll (5; 5₁, ..., 5₅; 5A; 5B) ein Gruppenverwaltungsprotokoll umfasst, das Nachrichtenübermittlungsfähigkeiten bereitstellt, die zur Gruppensteuerung und Knotengruppenmitgliedskommunikation erforderlich sind.

6. Knoten nach einem der Ansprüche 2 bis 4, **dadurch gekennzeichnet, dass** die Richtliniendurchsetzungsmittel (3; 3₁, ..., 3₅; 32; 32B) so ausgelegt sind, dass sie das Gruppenbildungsprotokoll steuern, z. B. indem sie ihm Befehle erteilen, wobei die Befehle den Entscheidungen entsprechen, die in den Richtlinienentscheidungsmitteln (3; 31, 3₁,..., 3₅; 31; 3B) getroffen werden.

7. Knoten nach Anspruch 6, **dadurch gekennzeichnet, dass** die Richtlinienentscheidungsmittel (3; 31, 3₁, ..., 3₅; 31; 3B) eine Richtlinienkonfliktauflösungsfunktion umfassen, die so ausgelegt ist, dass sie Konflikte zwischen Richtlinienregeln von verschiedenen aktiven Richtlinien erkennt und die Konflikte automatisch oder durch Aufrufen manuellen Eingriffs auflöst.

8. Daten- oder Telekommunikationsnetz, **dadurch gekennzeichnet, dass** es eine Anzahl von Knoten (10; 10₁, ..., 10₅; 10A; 10B) nach einem der Ansprüche 1 bis 7 umfasst.

9. Verfahren für Konfigurations- und Verwaltungsaufgaben in einem Netz, das Knoten umfasst, die Kommunikation und Vernetzung mit anderen Knoten mittels eines geschichteten Kommunikationsprotokoll, das eine Kommunikationsschicht umfasst, und ein Gruppenbildungsprotokoll unterstützen, wobei jeder der Knoten nach Anspruch 1 bis 7 ist.

## Revendications

1. Noeud (10; 10₁,..., 10₅; 10A; 10B) prenant en charge le réseautage et la communication avec d'autres noeuds au moyen d'un protocole de communication en couches (6; 6₁,..., 6₅; 6A; 6B) comprenant une couche de communication et prenant en charge en outre la communication de groupe avec d'autres noeuds commandés via un protocole de groupage adapté pour interagir avec ladite couche de communication, le noeud comprenant un moteur de politique (1, 2, 3; 1₁, 2₁, 3₁,...; 1A, 2A, 3A; 2B, 3B) qui est agencé séparément de, mais en communication avec, ledit protocole de groupage (5; 5₁,..., 5₅; 5A, 5B),
dans lequel
ledit moteur de politique comprend ou communique avec un moyen de surveillance (1; 1₁,..., 1₅; 1A, 1B) adapté pour collecter ladite information actuelle et/ou relative au changement concernant le statut et/ou l'activité des noeuds, groupes et réseau, ledit moteur de politique comprenant en outre un moyen de décision de politique, ledit moyen de surveillance (1; 1₁,...,1₅; 1A, 1B) étant adapté pour fournir ladite information au moyen de décision de politique (3; 31, 3₁,..., 3₅; 31; 3B), et un moyen de gestion de politique (2; 21,..., 25; 2A; 2B) adapté pour indiquer et/ou activer une ou des politiques de groupage à utiliser dans le groupage de noeuds et étant en outre adapté pour fournir une information relative auxdites une ou plusieurs politiques de groupage au moyen de décision de politique (3; 31, 3₁,..., 3₅; 31, 3B), le moyen de décision de politique (3; 31, 3₁,..., 3₅; 31; 3B) étant adapté pour interpréter lesdites politiques de groupage actives et prendre des décisions de politique relative aux groupage sur la base desdites interprétations, et un moyen d'implémentation de politique adapté pour implémenter lesdites décisions,
dans lequel le moyen d'implémentation de politique (3; 3₁,..., 3₅; 32, 32B) est adapté pour implémenter lesdites décisions en utilisant le protocole de groupage interagissant avec la couche de communication (6A; 6B₁) du protocole de communication (6; 6₁,..., 6₅; 6A; 6B),
dans lequel le noeud est adapté pour comprendre ou communiquer avec des applications de configuration et gestion et en ce que le moteur de politique est adapté pour créer et adapter dynamiquement le groupage et les fonctionnalités relatives aux groupage selon un contexte de réseau actuel et des tâches de configuration et gestion fournies par lesdites application de configuration et gestion.

2. Noeud selon la revendication 1, **caractérisé en ce que** le moyen de gestion de politique (2A; 2B) comprend un outil de gestion de politique (21A; 22A) avec une interface d'utilisateur (22A; 22B).

3. Noeud selon la revendication 2, **caractérisé en ce que** le moyen de gestion de politique (2A; 2B) comprend ou communique avec un moyen de gestion de politique (23A; 23B) détenant des politiques relatives au groupage.

4. Noeud selon les revendications 2 ou 3, **caractérisé en ce que** le moyen de décision de politique (3; 31, 3₁,..., 3₅; 31; 3B) est adapté pour commander un processus de décision relatif au groupage se rapportant à un ou plusieurs d'appartenance à un groupe de noeuds, structure de groupe, contraintes de groupe et d'élément de groupe, métriques.

5. Noeud selon une quelconque des revendications 2-4, **caractérisé en ce que** le protocole de groupage (5; 5₁,..., 5₅; 5A; 5B) comprend un protocole de gestion de groupe fournissant des capacités de messagerie requises pour la commande d'un groupe et la communication entre les noeuds membres d'un groupe.

6. Noeud selon une quelconque des revendications 2-7, **caractérisé en ce que** le moyen d'implémentation de politique (3; 3₁,..., 3₅; 32; 3B) est adapté afin de commander, par exemple en donnant des ordres à, le protocole de groupage, lesdits ordres correspondant aux décisions prises dans le moyen de décision de politique (3; 31, 3₁,..., 3₅; 31, 3B).

7. Noeud selon la revendication 6, **caractérisé en ce que** le moyen de décision de politique (3; 31, 3₁,....,3₅; 31; 3B) comprend une fonction de résolution de conflit de politique adaptée afin de détecter des conflits entre les règles de politique de différentes politiques actives et résoudre les conflits automatiquement ou au moyen de l'invocation d'une intervention manuelle.

8. Réseau de données ou de télécommunications, **caractérisé en ce que** il comprend une pluralité de noeuds (10; 10₁,..., 10₅; 10A; 10B) selon une quelconque des revendications 1-7.

9. Procédé de configuration et de gestion de tâches dans un réseau comprenant des noeuds prenant en compte la communication et le réseautage avec d'autres noeuds au moyen d'un protocole de communication en couches, comprenant une couche de communication, et un protocole de groupage, dans lequel chacun desdits noeuds est conforme aux revendications 1-7.
